# EUROPEAN PATENT APPLICATION

(11) **EP 2 947 591 A1**
(43) Date of publication of application: **25.11.2015**
(21) Application number: 14305753.7
(22) Date of filing: 22.05.2014
(51) Int. Cl.: G06F 21/31, G06F 21/46

(54) **Authentication by Password Mistyping Correction**

(71) Applicant: Thomson Licensing, 92130 Issy-les-Moulineaux (FR)
(72) Inventor: Maetz, Yves, 35576 Cesson-Sévigné (FR); Eluard, Marc, 35576 Cesson-Sévigné (FR); Stahl, Niclas, 92443 Issy-les-Moulineaux (FR)
(74) Representative: Browaeys, Jean-Philippe

(57) **Abstract**

A user interface (113) of an apparatus (110) receives (S02, S12) a password in a password space from a user; a processor (111) uses (S03, S13) canonicalization to obtain a representative form of the password, wherein the password space is partitioned into a plurality of partitions comprising at least one element, wherein one element of each partition is the representative form of the partition; the processor hashes the representative form of the password to obtain a hashed password and sends the hashed password to a server (120). The disclosure can provide resistance to typing errors in input passwords.

## Description

### TECHNICAL FIELD

The present disclosure relates generally to computer systems and in particular to the treatment of passwords in such systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

One very common way of authenticating a user is for the user to prove knowledge of a secret by inputting the secret using a real of virtual keyboard. Well-known examples of secrets are PIN codes and passwords, while passphrases are more uncommon.

Passwords are ubiquitous in today's computer systems, for example to authenticate a user for log-on. In its generic definition, a password is constituted of a succession of symbols (characters) taken within a predefined alphabet (for example: 4 numerical values for PIN code). A password is generally stronger the longer it is, in particular if the password is a mixture of uppercase and lowercase letters, numbers, and special characters such as &, " and #. However, a more complicated password is generally more complicated to type properly, especially since the typed characters do not appear on the screen. In addition, since users may be obliged to input the passwords many times a day, the passwords are often typed very quickly. It is thus not surprising that an input password can contain typing errors. Moreover touchscreen-based devices like smartphones and tablets use virtual keyboards to enter some text, including passwords. With this type of input, typing errors can be quite frequent.

In most traditional systems, the user inputs a value p from which is generated a corresponding hash value h(p) that is sent to an authentication server that verifies that h(p) is equal to h(s), in which s is the secret previously registered by the user.

The prior art comprises a number of solutions that provide resistance to typing errors.

The tool Password Variator builds a file with all possible variations of the password, emulating up to three typos such as missed characters, duplicated characters, extra characters, wrong order and wrong case. Andrew Mehler and Steven Skiena provide a different solution in Improving Usability Through Password-Corrective Hashing. Their solution processes the password before hashing - for example by sorting the input password alphabetically to correct transpositions - so that it is likely that a slightly misspelt password hashes to the same hash value as the correct password. It is evident that such multiplication of "acceptable" passwords drastically reduces the strength of the password.

The solutions in US 7373516, and JP 2005/208763 compares an input password with a stored password in the "password space," i.e. in the clear, to determine if the former is "similar" to the latter. However, since these solutions require a comparison of the plaintext version of the password, they cannot be used in real systems where storing the password in clear is generally unacceptable for obvious security reasons. US 2008/066167 is a similar solution in which a number of "close" passwords are created when the initial password is stored, and an input password is compared to both the initial and the close passwords when determining if the password is correct. As at least some embodiments require transmission of an input in the clear or encrypted so that a server can verify it, similar security problems apply to this solution. Generally, authentication is handled by a server that stores a hashed version of the password, to be compared by a hashed version of the password proposal typed by the user. This is due to the fact that if two inputs to the hash function are different, then the output is generally completely different, even if the inputs differ by just one letter.

JP 2007-114976 teaches a device, such as a PC, that among other things provides the function of keeping a count of the number of times a mistyped password is input and storing a mistyped password as an acceptable password when the number of times is sufficiently large, e.g. ten times. The skilled person will appreciate that the solution is insecure since there does not appear to be any control of the addition of the mistyped passwords; when a wrong password has been input ten times, it is stored as an acceptable password, which means that a hacker only needs to input a password ten times to have it accepted.

Gregory V. Bard provided a solution for passphrases in "Spelling-Error Tolerant, Order-Independent Pass-Phrases via the Damerau-Levenshtein String-Edit Distance Metric", 2007. The user is issued a passphrase in which each word has a Damerau-Levenshtein distance of at least five from all the other allowed words used in the system. Then, when a user inputs a passphrase, it is possible to compare the distance between each input word of the phrase and each allowed word; if the distance is at most two, then it is assumed that the user input the allowed word that was used for the comparison. The system thus enables the correction of two typing errors in each word of the passphrase, but the cost is that the system issues the passphrases to the users who cannot choose themselves.

It can therefore be appreciated that there is a need for a solution that can allow an authentication system to allow mistyped passwords without having the drawbacks of the prior art solutions. The present disclosure provides such a solution.

### SUMMARY

In a first aspect, the disclosure is directed to an apparatus for managing passwords in a password space partitioned into a plurality of disjoint partitions comprising at least one element, wherein one element of each partition is a representative form of the partition. The apparatus comprises a processor configured to: receive a password input by a user; obtain a representative form of the password by selecting the element that is the representative form of the partition comprising an element equal to the password; and send the representative form of the password to a further device.

In a first embodiment, the processor is configured to split the password into a plurality of parts, to obtain a representative form for each part and to obtain the representative form of the password by putting together the representative forms of the parts.

In a second embodiment, the processor is configure to use spell checking of the password to select the element.

In a third embodiment, the processor is configure to use a speech tagging mechanism to select the element.

In a fourth embodiment, the apparatus further comprises a second interface configured to send the representative form of the password to the further device.

In a fifth embodiment, the processor is further configured to hash the representative form of the password before sending it to the further device.

In a sixth embodiment, the apparatus further comprises a user interface configured to receive the password from the user. It is advantageous that the processor is further configured to, in case the password is received during input of a new password: present the representative form of the password to the user, the representative form of the password being generated from the password received during input of a new password; obtain user validation of the representative form of the password; and send the representative form of the password to the server only in case user validation is obtained.

In a seventh embodiment, the further device is an authentication server.

In a second aspect, the disclosure is directed to a method for managing passwords in a password space partitioned into a plurality of disjoint partitions comprising at least one element, wherein one element of each partition is a representative form of the partition. An apparatus receives a password input by a user; obtains a representative form of the password, by selecting the element that is the representative form of the partition comprising an element equal to the password; and sends the representative form of the password to a further device.

In a first embodiment, the processor further splits the password into a plurality of parts and obtaining a representative form for each part, wherein the representative form of the password is obtained by putting together the representative forms of the parts.

In a second embodiment, spell checking of the password is used to select the element.

In a third embodiment, a speech tagging mechanism is used to select the element.

In a fourth embodiment, in case the password is received during input of a new password: the apparatus presents the representative form of the password to the user; obtains user validation of the representative form of the password; and sends the representative form of the password to the further device only in case user validation is obtained.

In a third aspect, the disclosure is directed to a non-transitory computer program support storing instructions that, when executed by a processor performs the method of any embodiment of the second aspect.

### BRIEF DESCRIPTION OF DRAWINGS

Preferred features of the present disclosure will now be described, by way of non-limiting example, with reference to the accompanying drawings, in which
Figure 1 illustrates an exemplary system in which the disclosure may be implemented;
Figure 2 illustrates examples of canonicalization;
Figure 3 illustrates an exemplary method of password enrolment of the present disclosure.
Figure 4 illustrates an exemplary method of password authentication of the present disclosure.

### DESCRIPTION OF EMBODIMENTS

As a PIN code can be seen as a numerical special case of an alphanumerical password and as a passphrase can be seen as a password with spaces, the expression 'password' is in the following intended to be interpreted as a string with alphanumerical characters and special signs found on a keyboard such as #, - and &.

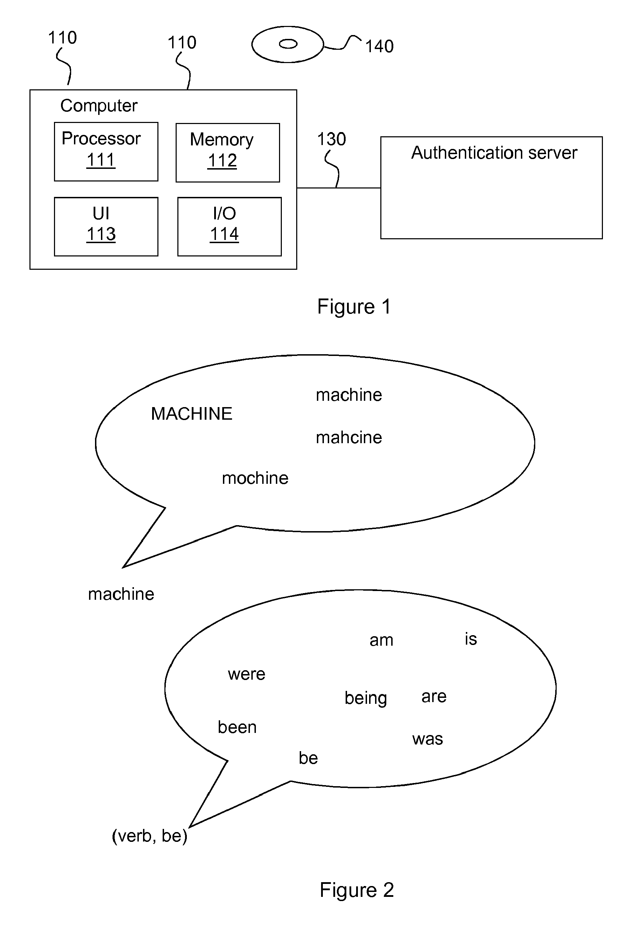

Figure 1 illustrates an exemplary system in which the present solution may be implemented. The system comprises a computing device ("computer") 110 and an authentication server 120. The computer 110 and the authentication server (hereinafter "server") 120 can be any kind of suitable computer or device capable of performing calculations, such as a standard Personal Computer (PC), a workstation, a Smartphone or a tablet. The computer 110 preferably comprises at least one hardware processor 111 configured to perform the computer side parts of the methods of the present disclosure, RAM memory 112, a user interface 113 for interacting with a user, and a second interface 114 for interaction with other devices over connection 130. The computer 110 also preferably comprises an interface for reading a software program from a digital data support 140 that stores instructions that, when executed by a processor, performs any of the password methods described hereinafter. The skilled person will appreciate that the illustrated devices are very simplified for reasons of clarity and that real devices in addition would comprise features such as persistent storage. The skilled person will appreciate that the present disclosure may also be implemented on just the computer 110 if the password just provides access to the computer itself; in this case, the server 120 is implemented in the computer.

Canonicalization converts data from one of several possible representations into a canonical (i.e. standard) form. One use of this is to allow comparison between different representations for equivalence.

A main idea is to use the canonical form of the elements of the user's password and not the elements themselves. The canonical form is therefore used as the password in an otherwise classical authentication system. This allow robustness to small typing errors. The amount of accepted errors depends on the canonicalization process used. In other words, a canonicalization process is used to partition the set of possible inputs into subsets. In each subset, a specific element represents the subset and will be the representative element of the subset. In order for the solution to operate correctly, the canonicalization should respect certain properties. The canonicalization should ensure that all the subsets are disjoint and that the elements of a subset have a unique canonical form: the representative element of the subset. Accordingly the canonicalization must ensure that an element that is not part of a subset does not map to any representative element.

It should be noticed that the server side can be the same as in the prior art password systems; its behaviour need not changed since, in most prior art systems, the secret is not stored in the clear but protected through a one-way cryptographic function (e.g. hash). It is thus sufficient to modify the client side to take into account typing errors. Preferably, the client software is protected with suitable software protection techniques to prevent leakage of the canonicalization function.

Various functions could be used as canonicalization process as illustrated in the following three examples.

A first example is for PIN codes. The user entry is a numerical value v of any length. The canonicalization is defined by the function C which sums each digit of the value and takes the rest of the Euclidian division by 10. This results in 10 values from 0 to 9 that represent 10 subsets of pin codes. For example, the user's secret is "12612". The server stores as a secret value the cryptographic hash of the canonical form of "12612", which is (1+2+6+1+2) mod 10, equal to 2 and noted h(2). When the user types erroneously "12621" (i.e. inverses the final two digits), the PIN will nevertheless be authenticated since this entry leads to the same canonical form, i.e. 2. This kind of canonicalization can be extended to handle more complex passwords such as alphanumeric passwords. In this case, the function C is defined by taking the decimal values of the characters in the ASCII table, sum all values and take the rest of the Euclidian division by 42. This last term can be varied to allow more or less canonical representations. In this latter case, 42 canonical forms are defined. The functions used in this example are trivial but illustrate the functionality and the required properties for such a system. However, the first canonicalization is extreme since an infinite universe of user proposals is mapped onto only 10 representative elements. Therefore it would not be very secure.

A second example is to use a spell checker as canonicalization process. In this case, we will not use the term provided by the user but the term corrected by the spell checker (or the first proposed alternative in case the correction is not automatic) in the considered language, hereafter as an example the English language - the skilled person will appreciate that this can be modified to other languages. Thus, the words such as "machine", "MACHINE", "MaCHiNe", , "mochine", "mahcine", etc. are corrected to the canonical form "machine". In this example, prior to the spell checker, each word is changed to the lowercase form. For some terms, such as "zorglub" or "vhnflkdvnhd" the spell checker cannot find any correction. Therefore these terms are considered as being in their canonical form. This example is particularly suited to passphrases by managing each word separately. An exemplary passphrase such as "corect hrose baterry staple" will be canonicalized to "correct horse battery staple".

It is advantageous that the spell checker is run during the enrolment phase (i.e. when the user selects the password) so that the user can adjust the proposed password to one that is considered 'correct' by the spell checker. For that, the canonical form of the proposed password is displayed to the user. For example, when proposing "stalp" the canonical form is "stall" and not "staple" as expected by the user.

It is acknowledged that some typing errors map onto a wrong word even though the error is 'small'. Naturally, the more unique a word is, an example being 'eczema', the greater the likelihood that more typing errors are correctly mapped.

A third example is based on part of a speech tagging mechanism. Such a mechanism allows canonicalization and classification of natural text. Typically for verbs, independently of the tense of the sentence, the canonicalization provides the verb in its infinitive form. The classification feature can also be used to refuse or eliminate given classes of words such as pronouns.

Figure 2 illustrates a different example of how words can be partitioned and one representative word is chosen to represent subsets. Only part of all possible expressions that map onto the word 'machine' and the verb forms of 'be' are shown.

The skilled person will appreciate that in order to get a robust system, the partition and maps should produce a large number of subsets with, preferably, a small number of elements in the subsets.

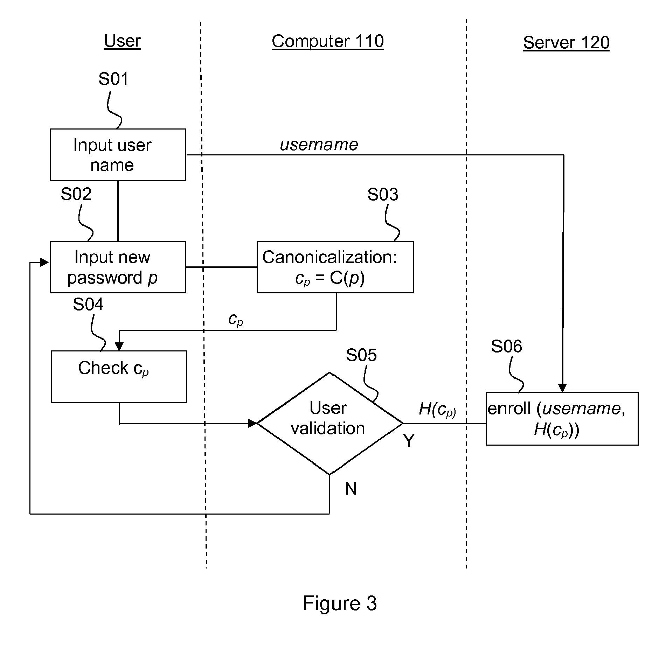

Figure 3 illustrates an exemplary enrolment method of the present disclosure. A user inputs S01 through a user interface 113 of a computer 110 a user name, which, as already mentioned, may be an optional step in case the username is implicit. The computer 110 transfers the user name, at this time or later, to a server 120. The user then enters S02 a new password p through the user interface 113 of the computer 110 whose processor 111 uses canonicalization S03 to obtain a representative form cₚ of the password. The representative form cₚ is presented to the user that checks the representative form cₚ and either validates or invalidates S05 the representative form cₚ. If invalidated, i.e. if the user does not agree with the representative form cₚ, then the user enters S02 a different new password. If validated, then the processor 111 sends a hashed version *H*(*cₚ*) of the validated representative form of the password (possibly together with the user name) through the second interface 114 to the server 120 that stores the hashed version together with the user name. As can be seen, the server 120 functions like a typical prior art server.

It will be understood that the user can input the user name and the password together.

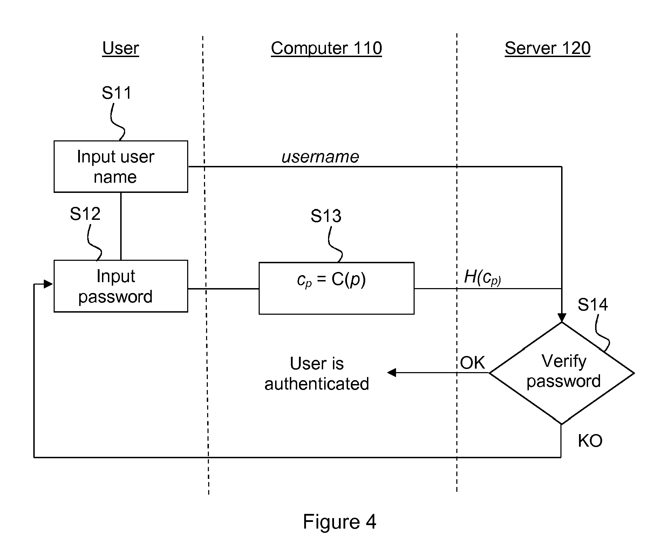

Figure 4 illustrates an exemplary method for password authentication according to the present disclosure. The user inputs S11 the user name and inputs S12 a password proposal *p'* through the user interface 113 of the computer 110. The processor 111 uses canonicalization S13 to obtain the representative form *c*_{*p*'} of the password proposal *p'* and sends a corresponding hash value *H*(*c*_{*p*'}) to the server 120. The server then authenticates the password proposal using the hash value as in the prior art.

It will be appreciated that in Figure 3 and Figure 4 the processor 111 can receive at least one of the user name, the new password *p* and the password proposal *p',* via an interface from a further device. Similarly, instead of sending the hashed version of the password to the server, it can be sent to a further device for, for example, temporary storage.

In a variant, the computer sends an unhashed password proposal to the server. If the server stores unhashed password proposals, then the comparison is straight-forward; if the server stores hashed password proposals, then the server needs to hash received password proposals both at creation of a password and at password verification. In the latter case, it will be noted that the server does not function as most prior art servers.

The password can be put through the canonicalization as a single entity, i.e. as one 'word', but it is also possible, preferable in the case of passphrases, to split the password into password elements and then put each password element through the canonicalization before the resulting representative elements are put together to form a representative form of the password.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. An apparatus (110) for managing passwords in a password space,
wherein the password space is partitioned into a plurality of disjoint partitions comprising at least one element, wherein one element of each partition is a representative form of the partition;
the apparatus comprising:
- a processor (111) configured to:
- receive a password input by a user;
- obtain a representative form of the password by selecting the element that is the representative form of the partition comprising an element equal to the password; and
- send the representative form of the password to a further device (120).

2. The apparatus of claim 1, wherein the processor (111) is configured to split the password into a plurality of parts, to obtain a representative form for each part and to obtain the representative form of the password by putting together the representative forms of the parts.

3. The apparatus of claim 1 or 2, the processor is configure to use spell checking of the password to select the element.

4. The apparatus of claim 1 or 2, the processor is configure to use a speech tagging mechanism to select the element.

5. The apparatus of claim 1, further comprising a second interface (114) configured to send the representative form of the password to the further device (120).

6. The apparatus of claim 1, wherein the processor is further configured to hash the representative form of the password before sending it to the further device (120).

7. The apparatus of claim 1, further comprising a user interface (113) configured to receive the password from the user.

8. The apparatus of claim 7, wherein the processor (111) is further configured to, in case the password is received during input of a new password:
- present the representative form of the password to the user, the representative form of the password being generated from the password received during input of a new password;
- obtain user validation of the representative form of the password; and
- send the representative form of the password to the server only in case user validation is obtained.

9. The apparatus of claim 1, wherein the further device (120) is an authentication server.

10. A method for managing passwords in a password space:
wherein the password space is partitioned into a plurality of disjoint partitions comprising at least one element, wherein one element of each partition is a representative form of the partition;
the method comprising at an apparatus (110):
- receiving (S02, S12) a password input by a user;
- obtaining (S03, S13) by a processor (111) a representative form of the password, by selecting the element that is the representative form of the partition comprising an element equal to the password; and
- send the representative form of the password to a further device (120).

11. The method of claim 10, further comprising by the processor (111) splitting the password into a plurality of parts and obtaining a representative form for each part, wherein the representative form of the password is obtained by putting together the representative forms of the parts.

12. The method of claim 10 or 11, wherein spell checking of the password is used to select the element.

13. The method of claim 10 or 11, wherein a speech tagging mechanism is used to select the element.

14. The method of claim 10, further comprising, in case the password is received during input of a new password:
- presenting the representative form of the password to the user;
- obtaining (S5) user validation of the representative form of the password; and
- sending the representative form of the password to the further device only in case user validation is obtained.

15. A non-transitory computer program support (140) storing instructions that, when executed by a processor (111) performs the method of any one of claims 10 to 14.
